# EUROPÄISCHE PATENTSCHRIFT

(11) **EP 2 839 749 B1**
(45) Veröffentlichungstag und Bekanntmachung des Hinweises auf die Patenterteilung: **02.01.2019**
(21) Anmeldenummer: 13180796.8
(22) Anmeldetag: 18.08.2013
(51) Int. Cl.: A23C 19/076, A23C 9/123

(54) **Quarkgrundmasse mit verbesserten Geschmackseigenschaften III**
Ground mass for curd cheese with improved taste properties III
Excipient de fromage blanc avec qualité de gout ameliorée III

(43) Veröffentlichungstag der Anmeldung: 25.02.2015
(73) Patentinhaber: DMK Deutsches Milchkontor GmbH, 27404 Zeven (DE)
(72) Erfinder: Schomacker, Marina, 27419 Sittensen (DE); Hahn, Michael, 27404 Heerlingen (DE); Döring, Sven-Rainer, 27404 Zeven (DE)
(74) Vertreter: Fabry, Bernd

(56) Entgegenhaltungen:
- EP-A1- 1 364 582
- EP-A1- 1 593 309
- DE-T2- 60 129 217
- US-A1- 2005 208 630
- SCHKODA P: "Das neue FML-Frischkäseverfahren", DEUTSCHE MILCHWIRTSCHAFT, HILDESHEIM, DE, Bd. 48, Nr. 2, 1997, Seiten 36-41, XP002101132, ISSN: 0012-0480
- Germano Mucchetti ET AL: "The pre-concentration of milk by nanofiltration in the production of Quarg-type fresh cheeses", Lait, 2000, Seiten 43-50, XP055087166, DOI: 10.1051/lait:2000106 Gefunden im Internet: URL:http://lait.dairy-journal.org/articles /lait/pdf/2000/01/L0107.pdf [gefunden am 2013-11-07]

## Beschreibung

### Gebiet der Erfindung

Die Erfindung befindet sich auf dem Gebiet Milchprodukte und betrifft einen geschmacksverbesserten Quark sowie ein Verfahren zu seiner Herstellung.

### Stand der Technik

Zur Herstellung von Quark wird in der Regel entrahmte Milch einer Temperaturbehandlung unterworfen und die enthaltenen Proteine denaturiert.

Durch die anschließende Zugabe von Milchsäurebakterien und Lab erfolgt die so genannte Dicklegung (Phasenumkehrung) der Milch. Das Casein gerinnt und bildet die fachlich bezeichnete Gallerte aus. Nach der Reifung (8 bis 20 h) wird die Gallerte aufgerührt. Hierdurch die Molkenabtrennung ausgelöst und im Separator werden dann die beiden Phasen getrennt. Die flüssige Sauermolke wird anderweitig verarbeitet und die Quarkgrundmasse durch Zugabe von Sahne auf den gewünschten Fett- und Proteingehalt eingestellt.

Dominiert werden die technischen Herstellverfahren durch entsprechende Separierverfahren. Durch Variation der Separierbedingungen und technische Modifikationen der Separatoren ist derzeit eine Vielfalt von Verfahrensausgestaltungen möglich. Der Magermilcheinsatz liegt bei einem Eiweißgehalt der Magermilch von 3,3 bis 3,5 Gew.-% im Bereich von 4,10 bis 4,15 kg Magermilch je Kilogramm zu produzierendem Magerquark oder Frischkäse (4,10 bis 4,15 kg Magermilch/kg Magerquark), wenn letztere 18 % Trockenmasse aufweisen. Somit fallen 3,10 bis 3,15 kg Sauermolke je Kilogramm Magerquark an (3,10 bis 3,15 kg Sauermolke/kg Magerquark). Der Eiweißgehalt erreicht dabei Größenordnungen von 12,6 bis 12,8 Gew.-%.

Neben den durch Separation gekennzeichneten Herstellverfahren sind auch Verfahren bekannt, in denen die Aufkonzentrierung der fermentierten Prozessmilch mittels Ultrafiltration erfolgt. So ist z.B. aus der US 2003/0129275 A1 (Lact Innovation) bekannt, dass bei der Käse- und Quarkherstellung auch die Mikrofiltration und Ultrafiltrationsschritte eingesetzt werden können. Die Anwendung der Mikrofiltration auf Magermilch zur Herstellung von Käse und Molkeproteinprodukten wird beispielsweise in der US 2003/0077357 A1 (Cornell Research Foundation) beschrieben.

Aus der EP1752046 A1 (Tuchenhagen) ist ein Verfahren zur Herstellung von fermentierten Milchprodukten bekannt, bei dem man Prozessmilch fermentiert, das Fermentationsprodukt einer Mikrofiltration unterwirft und nur das gesäuerte Retentat weiterverarbeitet.

Weitere Verfahren zur Herstellung von Quarkgrundmassen umfassend die Verwendung von Nanofitration sind bekannt aus Germano Mucchetti et al 2000; Schkoda 1997 und der EP 1 364 582 A1.

Die US 2005/208630 A1 und DE 601 29 217 T2 beschreiben Quarkgrundmassen, welche unter Einsatz von verschiedenen Starterkulturmischungen hergestellt wurden.

Diese Verfahren des Stands der Technik weisen indes zwei erhebliche Nachteile:
(i) Wird Magermilch mittels Ultrafiltration auf eine Quarkgrundmasse vorkonzentriert und anschließend gesäuert, weist das Produkt einen sehr bitteren Geschmack auf und ist sensorisch nicht akzeptabel. Diese sensorische Abweichung wird insbesondere durch die Anwesenheit von Phosphaten induziert. Alkalimetallionen, insbesondere Natrium, neigen dazu, einen metallischen Geschmack hervorzurufen. Die Verfahren des Stands der Technik zur Aufkonzentrierung von ungesäuerter Magermilch zu Quark sind bisher nicht in der Lage, Phosphate und Alkalimetallionen quantitativ abzutrennen, so dass noch solche Mengen im Produkt verbleiben, dass eine geschmackliche Beeinträchtigung nicht verhindert werden kann.
(ii) Des Weiteren stellt die Sauermolke ein Koppelprodukt dar, das als solches nicht erwünscht ist. Die Abtrennung der Molke vom Bruch ist technisch aufwendig und liefert ein Produkt, für das es nur einen kleinen Markt gibt.

Die Aufgabe der vorliegenden Erfindung hat somit darin bestanden, eine Quarkmasse mit geschmacklich verbesserten Eigenschaften zur Verfügung zu stellen, die ohne Zusatz von Additiven direkt abfüll- und verzehrfertig ist. Gleichzeitig sollte das entsprechende Herstellverfahren ohne den Anfall von Sauermolke als Abfallprodukt auskommen.

### Beschreibung der Erfindung

Ein erster Gegenstand der Erfindung betrifft eine Quarkgrundmasse mit verbesserten Geschmackseigenschaften, die dadurch erhältlich ist, dass man
(a) Rohmilch einer Temperaturbehandlung unterwirft und den Rahm abtrennt,
(b) die so erhaltene Magermilch einer Ultrafiltration unterwirft und dabei ein erstes Retentat R1, das ein Milchproteinkonzentrat enthält, und ein erstes Permeat P1 herstellt,
(c) das erste Permeat P1 einer Nanofiltration unterwirft und dabei ein zweites Retentat R2 und ein zweites Permeat P2, das Alkalisalze enthält, herstellt,
(d) das zweite Retentat R2 einer alkalischen Demineralisierung unterwirft und dabei ein drittes Retentat R3, welches Phosphatsalze enthält, und ein drittes Permeat P3 herstellt,
(e) das dritte Permeat P3 mit dem Retentat R1 vereinigt, so dass eine ungesäuerte Quarkgrundmasse entsteht, und
(f) die so erhaltene Mischung einer Temperaturbehandlung unterwirft, bis Denaturierung eintritt,
(g) das denaturierte Produkt mit Starterkulturen und Lab versetzt und gegebenenfalls
(h) die so nach Abschluss der Fermentation erhaltene Quarkgrundmasse auf einen definierten Trockenmassen- und Proteingehalt einstellt,
und im Schritt (g) als Starterkultur
(i) eine erste Mischung von fünf Mikroorganismen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) eine zweite Mischung von drei Mikroorganismen umfassend (ii-1) *Streptococcus thermophilus,* (ii-2) *Lactococcus lactis subsp. lactis* und (ii-3) *Lactococcus lactis subsp. cremoris*
einsetzt, wobei die Starterkultur 25 bis 75 Gew.-% der Mischung (i) und 75 bis 25 Gew.-% der Mischung (ii) enthält, mit der Maßgabe, dass sich die Mengenangaben zu 100 Gew.-% ergänzen, und in der Mischung (i) die fünf Mikroorganismen jeweils in Mengen von 20 ± 5 Gew.-% und in der Mischung (ii) die drei Mikroorganismen jeweils in Mengen von 33 ± 5 Gew.-% enthalten sind.

Ein zweiter Gegenstand der Erfindung ist auf ein Verfahren zur Herstellung eine Quarkgrundmasse mit verbesserten Geschmackseigenschaften gerichtet, bei dem man
(a) Rohmilch einer Temperaturbehandlung unterwirft und den Rahm abtrennt,
(b) die so erhaltene Magermilch einer Ultrafiltration unterwirft und dabei ein erstes Retentat R1, das ein Milchproteinkonzentrat enthält, und ein erstes Permeat P1 herstellt,
(c) das erste Permeat P1 einer Nanofiltration unterwirft und dabei ein zweites Retentat R2 und ein zweites Permeat P2, das Alkalisalze enthält, herstellt,
(d) das zweite Retentat R2 einer alkalischen Demineralisierung unterwirft und dabei ein drittes Retentat R3, welches Phosphatsalze enthält, und ein drittes Permeat P3 herstellt,
(e) das dritte Permeat P3 mit dem Retentat R1 vereinigt, so dass eine ungesäuerte Quarkgrundmasse entsteht, und
(f) die so erhaltene Mischung einer Temperaturbehandlung unterwirft, bis Denaturierung eintritt, und schließlich
(g) das denaturierte Produkt mit Starterkulturen und Lab versetzt und gegebenenfalls
(h) die so nach Abschluss der Fermentation erhaltene Quarkgrundmasse auf einen definierten Trockenmassen- und Proteingehalt einstellt,
und im Schritt (g) als Starterkultur
(i) eine erste Mischung von fünf Mikroorganismen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) eine zweite Mischung von drei Mikroorganismen umfassend (ii-1) *Streptococcus thermophilus,* (ii-2) *Lactococcus lactis subsp. lactis* und (ii-3) *Lactococcus lactis subsp. cremoris*
   einsetzt, wobei die Starterkultur 25 bis 75 Gew.-% der Mischung (i) und 75 bis 25 Gew.-% der Mischung (ii) enthält, mit der Maßgabe, dass sich die Mengenangaben zu 100 Gew.-% ergänzen, und in der Mischung (i) die fünf Mikroorganismen jeweils in Mengen von 20 ± 5 Gew.-% und in der Mischung (ii) die drei Mikroorganismen jeweils in Mengen von 33 ± 5 Gew.-% enthalten sind.

Überraschenderweise wurde gefunden, dass mit Hilfe des erfindungsgemäßen Verfahrens ein geschmacklich signifikant verbesserter Quark erhalten wird und gleichzeitig der unerwünschte Anfall von Sauermolke, die auch noch aufwendig abgetrennt werden muss, vermieden wird.

Insbesondere die Verwendung der ausgewählten Starterkulturen führt zu einem Quark, der cremig schmeckt und keinen schleimigen Gesamteindruck hinterlässt. Durch das hier beschriebene Verfahren kann des Weiteren der Sauermolkenanfall dadurch reduziert werden, dass bei der Vereinigung der Proteinfraktion und der demineralisierten Milchpermeates nur so viel Permeat zugegeben wird, wie benötigt wird, um die geforderten Werte im Endprodukt zu erreichen (z.B. Speisequark mit mindestens 18 Gew.-% Trockenmasse und mindesten absolut 12 Gew.-% Eiweiß). Die verbleibende Menge an Milchpermeat kann wirtschaftlich weiter verwendet werden; beispielsweise zur Herstellung von Lactose oder als günstiger Füllstoff in anderen Produkten.

### Herstellung der Magermilch

Zur Herstellung der Magermilch findet zunächst eine Abtrennung von festen Nichtmilchbestandteilen sowie die Entrahmung des Fettanteils von etwa 4 Gew.-% aus der Rohmilch statt. Dies findet üblicherweise in einem speziellen Bauteil, vorzugsweise einem Separator statt. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können.¹ Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.
¹ (http://www.westfalia-separator.com/de/anwendungen/molkereitechnik/milch-molke.html).

Die Wärmebehandlung der Rohmilch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

### Ultrafiltration, Mikrofiltration

Im zweiten Verfahrensschritt wird die Magermilch mit Hilfe einer Ultrafiltration und/oder Mikrofiltration in ein Milchproteinkonzentrat, das als Retentat anfällt und ein Milchpermeat abgetrennt.

Unter dem Begriff Ultrafiltration wird eine Filtration durch Membranen mit einer Porengröße < 0,1 µm verstanden, während die Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind.

Die Ultrafiltration erfolgt vorzugsweise bei Temperaturen im Bereich von etwa 10 bis etwa 55, vorzugsweise 10 bis 20 °C, wobei die Membranen vorzugsweise einen Porendurchmesser im Bereich von etwa 1.000 bis etwa 50.000 und vorzugsweise etwa 5.000 bis etwa 25.000 Dalton besitzen. Vorzugsweise handelt es sich um sogenannte Spiralwickelmembranen oder Platte-Rahmen-Module aus Polysulfon oder Polyethylenmembranen.

Der Einsatz der Mikrofiltration hat den Vorteil, dass auch ein Teil der Molkenproteine abgetrennt wird und so eine bittere Geschmacksnote im Endprodukt vermieden wird.

Eine Alternative zur Ultrafiltration, nicht entsprechend der Erfindung, stellt die Umkehrosmose dar. Hierbei wird die Magermilch unter Einsatz einer halbdurchlässigen (semipermeablen) Membran entwässert und dadurch die Konzentration der wertvollen Milchproteine erhöht. Das Prinzip besteht darin, das System einem Druck auszusetzen, der höher als der Druck ist, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Milch hat einen osmotischen Druck von weniger als 2 bar, der angewendete Druck für die Umkehrosmose von Milch beträgt 3 bis 30 bar, je nach verwendeter Membran und Anlagenkonfiguration. Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die Milchproteine zurückgehalten werden. Im Gegensatz zu einem klassischen Membranfilter verfügen Osmosemembranen nicht über durchgehende Poren. Die Umkehrosmose wird vorzugsweise Umkehrosmose bei einer Temperatur im Bereich von 10 bis 55, vorzugsweise 10 bis 20 °C mit semipermeablen Membranen durchgeführt, die eine Trennschärfe von 0 bis 1.000 Dalton aufweisen.

### Nanofiltration

An die Ultrafiltration schließt sich als dritter Verfahrensschritt die Abtrennung von Alkalisalzen, speziell Natrium- und Kaliumsalzen an, die über eine Nanofiltration erreicht wird.

Die Nanofiltration ordnet sich zwischen Ultrafiltration und Umkehrosmose ein und wird grundsätzlich analog zur Ultrafiltration durchgeführt. Allerdings sind die Membranen noch feinporiger und die Trennschärfe beträgt zwischen 100 und 1.000 Dalton (entsprechend einem mittleren Porendurchmesser von 0,01 bis 0,001 µm), wobei der Differenzdruck im Allgemeinen bei etwa 3 bis 40 bar liegt. Nanofiltrationsmembranen ähneln den Membranen der Umkehrosmose. Auf einer Stützschicht liegt eine dünne selektive Schicht auf. Im Sinne des erfindungsgemäßen Verfahrens werden meist Spiralwickelmodule verwendet. Durch ihre kompakte Bauweise ist es möglich große Membranflächen auf kleiner Fläche unterzubringen. Dies ermöglicht die Behandlung relativ großer Volumenströme. Die Voraussetzung für den Einsatz solcher Spiralwickelmodule ist allerdings ein Feedstrom mit geringer Feststoffbelastung.

### Demineralisierung

Das Retentat aus der Vorstufe weist - gegebenenfalls nach Aufkonzentrieren - einen Gehalt an gelösten Phosphaten in der Größenordnung von 1 bis 2 Gew.-% auf. Nach der Abtrennung von Natrium- und Kaliumsalzen werden auch diese Salze entfernt.

Um die Phosphate möglichst vollständig abzutrennen, werden die Lösungen durch Zugabe von Basen zunächst auf einen annähernd neutralen pH-Wert im Bereich von 6 bis 8 eingestellt und die Mineralien, die im Wesentlichen lösliche Phosphate darstellen mit einer solchen Menge einer Lösung eines wasserlöslichen Calciumsalzes versetzt, dass schwerlösliche Calciumsalze gefällt werden. Zur Einstellung des pH-Wertes und zur Fällung werden NaOH, eine wässrige Zubereitung aus Calciumchlorid und Alkalihydroxid oder Calciumhydroxid einsetzt. Grundsätzlich können zur Einstellung des pH-Wertes auch andere Alkali- oder Erdalkalibasen, wie z.B.-KOH eingesetzt werden. Auch die Natur des Fällungssalzes ist an sich unkritisch, es lassen sich beispielsweise Bariumsalze fällen. Die Verwendung von Calciumsalzen hat indes den Vorteil, dass das Fällungsmittel kostengünstig und die Salze ein sehr niedriges Löslichkeitsprodukt haben, die Fällung also im Wesentlichen vollständig ist. Auch ohne Zugabe von Fällungsmitteln erfolgt die Demineralisierung in Rührkesseln, wobei es sich als vorteilhaft erwiesen hat, eine Temperatur im Bereich von etwa 50 bis 90 und vorzugsweise von etwa 80 °C einzustellen. Die Fällungszeit liegt typischerweise bei etwa 20 bis 120 und vorzugsweise etwa 30 bis 45 min, wobei diese Angaben nur als Anhaltspunkte zu verstehen sind, da niedrigere Temperaturen längere Reaktionszeiten erfordern und umgekehrt. Nach der Fällung werden die Salze abgetrennt, beispielsweise in Separatoren, welche das größere spezifische Gewicht der gefällten Partikel ausnutzen. Es ist aber ebenso möglich, die Abtrennung beispielsweise durch Membranfilter im Rahmen einer weiteren Ultrafiltration im Bereich 5.000 bis 150.000 Dalton, vorzugsweise 10.000 bis 50.000 Dalton vorzunehmen.

### Denaturierung

Im folgenden Schritt wird die proteinreiche Fraktion aus der Ultrafiltration, also das Retentat R1, mit dem Permeat aus der Demineralisierungsstufe vereinigt und einer thermischen Behandlung unterworfen. Die nun erfolgende Denaturierung kann in an sich bekannter Weise erfolgen, nämlich über einen Zeitraum von etwa 5 bis etwa 10 min und vorzugsweise etwa 6 min und Temperaturen von etwa 85 bis etwa 90 °C und insbesondere etwa 88 °C.

### Fermentation und Standardisierung

Auch die Fermentation des denaturierten Vorproduktes kann nach den bekannten Verfahren des Stands der Technik erfolgen. Dazu werden geeignete Starterkulturen und Lab zugesetzt.

Als Starterkultur wird
(i) eine erste Mischung von fünf Mikroorganismen umfassend (i-1) Streptococcus thermophilus, (i-2) Leuconostoc species, (i-3) Lactococcus lactis subsp. lactis biovar diacetylactis, (i-4) Lactococcus lactis subsp. lactis und (i-5) Lactococcus lactis subsp. cremoris, und
(ii) eine zweite Mischung von drei Mikroorganismen umfassend (ii-1) Streptococcus thermophilus, (ii-2) Lactococcus lactis subsp. lactis und (ii-3) Lactococcus lactis subsp. cremoris eingesetzt, wobei die Starterkultur 25 bis 75 Gew.-% der Mischung (i) und 75 bis 25 Gew.-% der Mischung (ii) enthält,
mit der Maßgabe, dass sich die Mengenangaben zu 100 Gew.-% ergänzen, und in der Mischung
(i) die fünf Mikroorganismen jeweils in Mengen von 20 ± 5 Gew.-% und in der Mischung
(ii) die drei Mikroorganismen jeweils in Mengen von 33 ± 5 Gew.-% enthalten sind.

Besonders bevorzugt sind Starterkulturen, die
- etwa 40 bis etwa 60 Gew.-% der Mischung (i) und
- etwa 60 bis etwa 40 Gew.-% der Mischung (ii)
mit den obigen Maßgaben enthalten. Statt die beiden im Handel erhältlichen Zubereitungen (i) und (ii) gemeinsam einzusetzen, ist es natürlich grundsätzlich auch möglich, die fünf Mikroorganismen einzeln zu verwenden und dann so abzumischen, dass eine Starterkulturmischung wie vorstehend und in den Ansprüchen definiert erhalten wird, mit der die geschmacklich verbesserten Quarkprodukte erhalten werden. Solche Starterkulturen enthalten dann vorzugsweise
- etwa 20 bis etwa 30 Gew.-% *Streptococcus thermophilus,*
- etwa 5 bis etwa 15 Gew.-% *Leuconostoc species,*
- etwa 5 bis etwa 10 Gew.-% *Lactococcus lactis subsp. lactis biovar diacetylactis,*
- etwa 20 bis etwa 30 Gew.-% *Lactococcus lactis subsp. lactis,*
- etwa 20 bis etwa 30 Gew.-% *Lactococcus lactis subsp. cremoris,* und
mit der Maßgabe, dass sich die Mengenangaben zu 100 Gew.-% ergänzen.

Besonders bevorzugt sind Starterkulturen enthaltend
- 25 Gew.-% *Streptococcus thermophilus,*
- 12 Gew.-% *Leuconostoc species,*
- 13 Gew.-% *Lactococcus lactis subsp. lactis biovar diacetylactis,*
- 25 Gew.-% *Lactococcus lactis subsp. lactis,*
- 25 Gew.-% *Lactococcus lactis subsp. cremoris*

Alle genannten Mikroorganismen sind im Handel frei verfügbar.

Die Temperatur, bei der die Fermentation erfolgt, richtet sich nach dem Temperaturbereich, der für die jeweilig verwendeten Mikroorganismen optimal ist; typisch liegt die Temperatur im Bereich von etwa 18 bis etwa 35 °C und vorzugsweise bei etwa 30 °C. Die nach der Fermentation erhaltene Quarkgrundmasse wird anschließend beispielsweise durch Zugabe von Sahne auf den gewünschten Gehalt an Trockenmasse und Proteinen eingestellt. Vorzugsweise liegt der Trockenmassengehalt bei etwa 15 bis etwa 20 Gew.-% und insbesondere bei etwa 18 Gew.-%. Der Proteingehalt kann etwa 10 bis etwa 15 Gew.-% und vorzugsweise etwa 12 Gew.-% betragen.

### Beispiele

### Vergleichsbeispiel V1

4 kg Magermilch wurden 6 min bei 88 °C behandelt und die enthaltenen Proteine denaturiert. Die Masse wurde mit *Bifidobakterium* und Lab versetzt und bei 30 °C etwa 18 h gereift und anschließend aufgerührt. Anschließend wurde das Fermentationsprodukt in eine Zentrifuge gegeben und ca. 3,2 kg Sauermolke als flüssiger Bestandteil abgetrennt. Die zurückgebliebene Quarkmasse (ca. 800 g) wurde durch Zugabe von Sahne auf eine Trockenmasse von 18 Gew.-% und einen Proteingehalt von 12 Gew.-% eingestellt.

In der Verkostung erwies sich das Produkt als bitter/sandig und abweichend für den Verzehr an sich ungeeignet.

### Beispiel 1

4 kg Magermilch wurden bei 20 °C einer Ultrafiltration mit einer Spiralwickelmembran (Trennschärfe 25.000 Dalton) unterworfen. Das proteinreiche Retentat wurde abgetrennt und das Permeat bei 20 °C einer Nanofiltration mit einer Spiralwickelmembran unterworfen (Trennschärfe 500 Dalton). Mit dem Permeat wurden Natrium- und Kaliumsalze abgetrennt. Das Retentat wurde anschließend durch Zugabe einer wässrigen, mit NaOH auf pH = 6 eingestellten Calciumchlorid-Lösung behandelt und die Phosphate als Calciumphosphat gefällt. Das so erhaltene Permeat wurde mit dem proteinreichen Retentat aus dem ersten Schritt vereinigt, 6 min bei 88 °C behandelt und die enthaltenen Proteine denaturiert. Die Masse wurde mit einer Mischung der beiden Starterkulturmischungen (i) und (ii) im Gewichtsverhältnis 60:40 und Lab versetzt und bei 30 °C etwa 2 h gerührt. Anschließend wurde das Fermentationsprodukt in eine Zentrifuge gegeben und die Sauermolke als flüssiger Bestandteil abgetrennt. Die zurückgebliebene Quarkmasse wurde durch Zugabe von Sahne auf eine Trockenmasse von 18 Gew.-% und einen Proteingehalt von 12 Gew.-% eingestellt.

In der Verkostung erwies sich das Produkt als frei von Bitterstoffen und wurde als sofort verzehrfertig eingestuft.

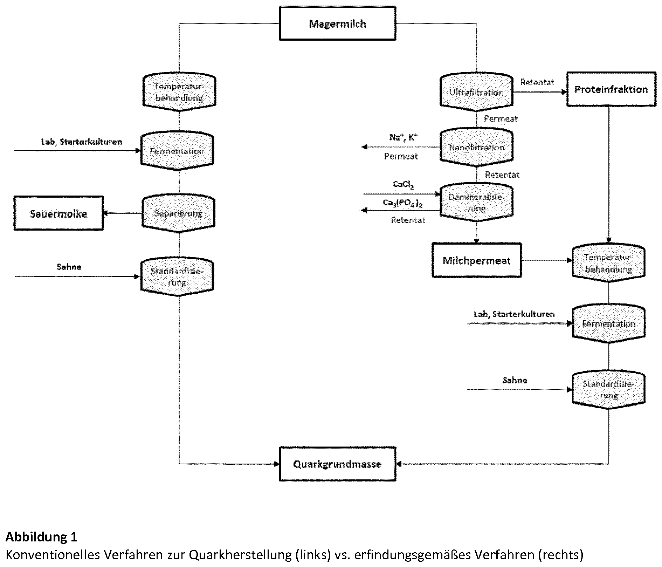

Die beiden Verfahren sind als Fließschemata in **Abbildung 1** wiedergegeben.

### Beispiele 2 bis 4, Vergleichsbeispiele V2 bis V4

Beispiel 1 wurde wiederholt, jedoch unterschiedliche Starterkulturen eingesetzt. Anschließend wurden die Produkte von einem Panel bestehend aus 5 erfahrenen Testern geschmacklich und sensorisch auf einer Skala von 1 (= trifft nicht zu) bis 6 (= trifft voll zu) beurteilt. Die Ergebnisse sind in **Tabelle 1** zusammengefasst. Die Beispiele 2 bis 7 sind erfindungsgemäß, Beispiel V2 dient wieder zum Vergleich. Angegeben sind die Mittelwerte der Beurteilungen.

**Tabelle 1**

| Geschmackliche und sensorische Beurteilung der Quarkgrundmassen | | | | | |
|---|---|---|---|---|---|
| **Bsp.** | **Starterkultur** | **Geschmack** | **Sensorik** | | |
| | | **Bitter** | **Cremig** | **Glatt** | **Schleimig** |
| V2 | *Bifidobakterium* | 5,5 | 3,0 | 2,0 | 5,5 |
| V3 | Mischung (i) | 3,0 | 2,5 | 2,0 | 4,0 |
| V4 | Mischung (i) | 4,0 | 2,0 | 2,0 | 4,0 |
| 2 | Mischung (i+ii) = 75:25 | 2,0 | 4,0 | 3,5 | 2,0 |
| 3 | Mischung (i+ii) = 50:50 | 1,5 | 4,5 | 4,0 | 1,0 |
| 4 | Mischung (i+ii) = 25:75 | 2,5 | 4,0 | 3,5 | 1,5 |

Die Versuche und Vergleichsversuche zeigen deutlich, dass die Auswahl der Starterkulturen einen erheblichen Einfluss auf die geschmacklichen und sensorischen Eigenschaften der Quarkgrundmasse hat. Die Quarkgrundmasse mit den besten Eigenschaften, d.h. der geringsten Bitterkeit, der höchsten Cremigkeit, die zudem keinen schleimigen Eindruck hinterlässt wurde mit einer erfindungsgemäßen Kombination aus den Mischungen (i) und (ii) im Gewichtsverhältnis 1:1 erreicht.

## Patentansprüche

1. Quarkgrundmasse mit verbesserten Geschmackseigenschaften, dadurch erhältlich, dass man
(a) Rohmilch einer Temperaturbehandlung unterwirft und den Rahm abtrennt,
(b) die so erhaltene Magermilch einer Ultrafiltration und/oder Mikrofiltration unterwirft und dabei ein erstes Retentat R1, das ein Milchproteinkonzentrat enthält, und ein erstes Permeat P1 herstellt,
(c) das erste Permeat P1 einer Nanofiltration unterwirft und dabei ein zweites Retentat R2 und ein zweites Permeat P2, das Alkalisalze enthält, herstellt,
(d) das zweite Retentat R2 einer alkalischen Demineralisierung unterwirft und dabei ein drittes Retentat R3, welches Phosphatsalze enthält, und ein drittes Permeat P3 herstellt,
(e) das dritte Permeat P3 mit dem Retentat R1 vereinigt, so dass eine ungesäuerte Quarkgrundmasse entsteht, und
(f) die so erhaltene Mischung einer Temperaturbehandlung unterwirft, bis Denaturierung eintritt, und schließlich
(g) das denaturierte Produkt mit Starterkulturen und Lab versetzt und gegebenenfalls
(h) die nach Abschluss der Fermentation erhaltene Quarkgrundmasse auf einen definierten Trockenmassen- und Proteingehalt einstellt,
und im Schritt (g) als Starterkultur
(i) eine erste Mischung von fünf Mikroorganismen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) eine zweite Mischung von drei Mikroorganismen umfassend (ii-1) *Streptococcus thermophilus,* (ii-2) *Lactococcus lactis subsp. lactis* und (ii-3) *Lactococcus lactis subsp. cremoris*
einsetzt,
wobei die Starterkultur 25 bis 75 Gew.-% der Mischung (i) und 75 bis 25 Gew.-% der Mischung (ii) enthält, mit der Maßgabe, dass sich die Mengenangaben zu 100 Gew.-% ergänzen,
und
in der Mischung (i) die fünf Mikroorganismen jeweils in Mengen von 20 ± 5 Gew.-% und in der Mischung (ii) die drei Mikroorganismen jeweils in Mengen von 33 ± 5 Gew.-% enthalten sind.

2. Verfahren zur Herstellung einer Quarkgrundmasse mit verbesserten Geschmackseigenschaften, bei dem man
(a) Rohmilch einer Temperaturbehandlung unterwirft und den Rahm abtrennt,
(b) die so erhaltene Magermilch einer Ultrafiltration und/oder Mikrofiltration unterwirft und dabei ein erstes Retentat R1, das ein Milchproteinkonzentrat enthält, und ein erstes Permeat P1 herstellt,
(c) das erste Permeat P1 einer Nanofiltration unterwirft und dabei ein zweites Retentat R2 und ein zweites Permeat P2, das Alkalisalze enthält, herstellt,
(d) das zweite Retentat R2 einer alkalischen Demineralisierung unterwirft und dabei ein drittes Retentat R3, welches Phosphatsalze enthält, und ein drittes Permeat P3 herstellt,
(e) das dritte Permeat P3 mit dem Retentat R1 vereinigt, so dass eine ungesäuerte Quarkgrundmasse entsteht, und
(f) die so erhaltene Mischung einer Temperaturbehandlung unterwirft, bis Denaturierung eintritt, und schließlich
(g) das denaturierte Produkt mit Starterkulturen und Lab versetzt und gegebenenfalls
(h) die nach Abschluss der Fermentation erhaltene Quarkgrundmasse auf einen definierten Trockenmassen- und Proteingehalt einstellt,
und im Schritt (g) als Starterkultur
(i) eine erste Mischung von fünf Mikroorganismen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) eine zweite Mischung von drei Mikroorganismen umfassend (ii-1) *Streptococcus thermophilus,* (ii-2) *Lactococcus lactis subsp. lactis* und (ii-3) *Lactococcus lactis subsp. cremoris*
einsetzt,
wobei die Starterkultur 25 bis 75 Gew.-% der Mischung (i) und 75 bis 25 Gew.-% der Mischung (ii) enthält, mit der Maßgabe, dass sich die Mengenangaben zu 100 Gew.-% ergänzen,
und
in der Mischung (i) die fünf Mikroorganismen jeweils in Mengen von 20 ± 5 Gew.-% und in der Mischung (ii) die drei Mikroorganismen jeweils in Mengen von 33 ± 5 Gew.-% enthalten sind.

3. Verfahren nach Anspruch 2, **dadurch gekennzeichnet, dass** man die Ultrafiltration mit Membranen durchführt, die eine Trennschärfe von 1.000 bis 50.000 Dalton aufweisen.

4. Verfahren nach mindestens einem der Ansprüche 2 bis 3, **dadurch gekennzeichnet, dass** man die Ultrafiltration oder Mikrofiltration mit Spiralwickelmodulen oder Platte-Rahmen-Modulen durchführt.

5. Verfahren nach mindestens einem der Ansprüche 2 bis 4, **dadurch gekennzeichnet, dass** man die Ultrafiltration oder Mikrofiltration bei einer Temperatur im Bereich von 10 bis 55 °C durchführt.

6. Verfahren nach mindestens einem der Ansprüche 2 bis 5, **dadurch gekennzeichnet, dass** man die Nanofiltration mit Membranen durchführt, die eine Trennschärfe von 100 bis 1.000 Dalton aufweisen.

7. Verfahren nach mindestens einem der Ansprüche 2 bis 6, **dadurch gekennzeichnet, dass** man die Nanofiltration mit Spiralwickelmodulen durchführt.

8. Verfahren nach mindestens einem der Ansprüche 2 bis 7, **dadurch gekennzeichnet, dass** man die Nanofiltration bei einer Temperatur im Bereich von 10 bis 55 °C durchführt.

9. Verfahren nach mindestens einem der Ansprüche 2 bis 8, **dadurch gekennzeichnet, dass** man zur Demineralisierung die Phosphate als Calciumsalze fällt.

10. Verfahren nach mindestens einem der Ansprüche 2 bis 9, **dadurch gekennzeichnet, dass** man die Demineralisierung bei einer Temperatur im Bereich von 50 bis 90 °C durchführt.

11. Verfahren nach mindestens einem der Ansprüche 2 bis 10, **dadurch gekennzeichnet, dass** man das Vereinigungsprodukt aus dem Permeat P3 und dem Retentat R1 über einen Zeitraum von 5 bis 10 min einer Temperaturbehandlung von 85 bis 90 °C unterwirft und dabei denaturiert.

12. Verfahren nach mindestens einem der Ansprüche 2 bis 11, **dadurch gekennzeichnet, dass** man die so erhaltene denaturierte Masse bei 25 bis 35 °C mit Kulturen und Lab versetzt.

## Claims

1. A quark base composition having enhanced taste properties, obtainable in that
(a) raw milk is subjected to a temperature treatment and the cream is separated off,
(b) the resultant skimmed milk is subjected to an ultrafiltration and/or microfiltration and thereby producing a first retentate R1, which contains a dairy-protein concentrate, and a first permeate P1,
(c) the first permeate P1 is subjected to a nanofiltration and thereby producing a second retentate R2 and a second permeate P2, which contains alkali metal salts is produced,
(d) the second retentate R2 is subjected to an alkaline demineralisation and thereby producing a third retentate R3, which contains phosphate salts, and a third permeate P3,
(e) the third permeate P3 is combined with the first retentate R1 to produce an unacidulated quark mass, and
(f) the mixture thus obtained is subjected to a heat treatment until it is denatured, and finally
(g) starter cultures and rennet are added to the denatured product, and optionally
(h) the quark mass thus obtained is brought to a defined dry mass- and protein content after fermentation is complete,
and in step (g) as starter culture
(i) a first mixture of five microorganisms comprising (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* and (i-5) *Lactococcus lactis subsp. cremoris,* and
(ii) a second mixture of three microorganisms comprising (ii-1) *Streptococcus thermophilus,* (ii-2) *Lactococcus lactis subsp. lactis* and (ii-3) *Lactococcus lactis subsp. Cremoris*
is used,
wherein the starter culture contains 25 to 75% by weight of the mixture (i) and 75 to 25% by weight of the mixture (ii) with the proviso that the amounts add up to 100% by weight,
and
in the mixture (i) the five microorganisms are each present in amounts of 20 ± 5% by weight and in the mixture (ii) the three microorganisms are each present in amounts of 33 ± 5% by weight.

2. A method for producing a quark mass having improved taste properties, in which
(a) raw milk is subjected to a temperature treatment and the cream is separated off,
(b) the resultant skimmed milk is subjected to an ultrafiltration and/or microfiltration and thereby producing a first retentate R1, which contains a dairy-protein concentrate, and a first permeate P1,
(c) the first permeate P1 is subjected to a nanofiltration and thereby producing a second retentate R2 and a second permeate P2, which contains alkali metal salts is produced,
(d) the second retentate R2 is subjected to an alkaline demineralisation and thereby producing a third retentate R3, which contains phosphate salts, and a third permeate P3,
(e) the third permeate P3 is combined with the first retentate R1 to produce an unacidulated quark mass, and
(f) the mixture thus obtained is subjected to a heat treatment until it is denatured, and finally
(g) starter cultures and rennet are added to the denatured product, and optionally
(h) the quark mass thus obtained is brought to a defined dry mass- and protein content after fermentation is complete,
and in step (g) as starter culture
(i) a first mixture of five microorganisms comprising (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* and (i-5) *Lactococcus lactis subsp. cremoris,* and
(ii) a second mixture of three microorganisms comprising (ii-1) *Streptococcus thermophilus,* (ii-2) *Lactococcus lactis subsp. lactis* and (ii-3) *Lactococcus lactis subsp. Cremoris*
is used,
wherein the starter culture contains 25 to 75% by weight of the mixture (i) and 75 to 25% by weight of the mixture (ii) with the proviso that the amounts add up to 100% by weight,
and
in the mixture (i) the five microorganisms are each present in amounts of 20 ± 5% by weight and in the mixture (ii) the three microorganisms are each present in amounts of 33 ± 5% by weight.

3. A method according to claim 2, wherein ultrafiltration is carried out using membranes that have a selectivity of 1,000 to 50,000 Daltons.

4. A method according to at least one of claims 2 to 3, wherein the ultrafiltration or microfiltration is carried out using spiral-wound modules or plate-frame modules.

5. A method according to at least one of claims 2 to 4, wherein the ultrafiltration or microfiltration is carried out at a temperature in the range of 10 to 55 °C.

6. A method according to at least one of claims 2 to 5, wherein the nanofiltration is carried out using membranes that have a selectivity of 100 to 1,000 Daltons.

7. A method according to at least one of claims 2 to 6, wherein the nanofiltration is carried out using spiral-wound modules.

8. A method according to at least one of claims 2 to 7, wherein the nanofiltration is carried out at a temperature in the range of 10 to 55 °C.

9. A method according to at least one of claims 2 to 8, wherein the phosphates are precipitated as calcium salts for the purpose of demineralisation.

10. A method according to at least one of claims 2 to 9, wherein the demineralisation is carried out at a temperature in the range of 50 to 90 °C.

11. A method according to at least one of claims 2 to 10, wherein the product made up of a combination of the permeate P3 and the retentate R1 is subjected to a heat treatment of 85 to 90 °C for 5 to 10 minutes and is thus denatured.

12. A method according to at least one of claims 2 to 11, wherein cultures and rennet are added at 25 to 35 °C to the denatured mass thus obtained.

## Revendications

1. Masse de base de caillebotte à propriétés gustatives améliorées, pouvant être obtenue en ce que
(a) du lait brut est soumis à un traitement thermique et la crème est séparée,
(b) le lait écrémé ainsi obtenu est soumis à une ultrafiltration et/ou une microfiltration, et un premier rétentat R1, qui contient un concentré de protéines de lait, et un premier perméat P1 sont formés,
(c) le premier perméat P1 est soumis à une nanofiltration, et un deuxième rétentat R2 et un deuxième perméat P2, qui contient des sels alcalins, sont formés,
(d) le deuxième rétentat R2 est soumis à une déminéralisation alcaline, et un troisième rétentat R3, qui contient des sels de phosphate, et un troisième perméat P3 sont formés,
(e) le troisième perméat P3 est réuni avec le rétentat R1, de manière à former une masse de base de caillebotte non acidifiée, et
(f) le mélange ainsi obtenu est soumis à un traitement thermique jusqu'à ce qu'une dénaturation ait lieu, et enfin
(g) le produit dénaturé est mélangé avec des cultures de départ et de la présure, et éventuellement
(h) la masse de base de caillebotte obtenue après la fin de la fermentation est ajustée à une teneur en matière sèche et en protéines définie,
et, à l'étape (g), en tant que culture de départ,
(i) un premier mélange de cinq microorganismes comprenant (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* et (i-5) *Lactococcus lactis subsp. cremoris,* et
(ii) un deuxième mélange de trois microorganismes comprenant (ii-1) *Streptococcus thermophilus,* (ii-2) *Lactococcus lactis subsp. lactis* et (ii-3) *Lactococcus lactis subsp. cremoris,*
sont utilisés,
la culture de départ contenant 25 à 75 % en poids du mélange (i) et 75 à 25 % en poids du mélange (ii), à condition que la somme des indications de quantité soit de 100 % en poids,
et
dans le mélange (i), les cinq microorganismes étant chacun contenus en quantités de 20 ± 5 % en poids et, dans le mélange (ii), les trois microorganismes étant chacun contenus en quantités de 33 ± 5 % en poids.

2. Procédé de fabrication d'une masse de base de caillebotte à propriétés gustatives améliorées, selon lequel
(a) du lait brut est soumis à un traitement thermique et la crème est séparée,
(b) le lait écrémé ainsi obtenu est soumis à une ultrafiltration et/ou une microfiltration, et un premier rétentat R1, qui contient un concentré de protéines de lait, et un premier perméat P1 sont formés,
(c) le premier perméat P1 est soumis à une nanofiltration, et un deuxième rétentat R2 et un deuxième perméat P2, qui contient des sels alcalins, sont formés,
(d) le deuxième rétentat R2 est soumis à une déminéralisation alcaline, et un troisième rétentat R3, qui contient des sels de phosphate, et un troisième perméat P3 sont formés,
(e) le troisième perméat P3 est réuni avec le rétentat R1, de manière à former une masse de base de caillebotte non acidifiée, et
(f) le mélange ainsi obtenu est soumis à un traitement thermique jusqu'à ce qu'une dénaturation ait lieu, et enfin
(g) le produit dénaturé est mélangé avec des cultures de départ et de la présure, et éventuellement
(h) la masse de base de caillebotte obtenue après la fin de la fermentation est ajustée à une teneur en matière sèche et en protéines définie,
et, à l'étape (g), en tant que culture de départ,
(i) un premier mélange de cinq microorganismes comprenant (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* et (i-5) *Lactococcus lactis subsp. cremoris,* et
(ii) un deuxième mélange de trois microorganismes comprenant (ii-1) *Streptococcus thermophilus,* (ii-2) *Lactococcus lactis subsp. lactis* et (ii-3) *Lactococcus lactis subsp. cremoris,*
sont utilisés,
la culture de départ contenant 25 à 75 % en poids du mélange (i) et 75 à 25 % en poids du mélange (ii), à condition que la somme des indications de quantité soit de 100 % en poids,
et
dans le mélange (i), les cinq microorganismes étant chacun contenus en quantités de 20 ± 5 % en poids et, dans le mélange (ii), les trois microorganismes étant chacun contenus en quantités de 33 ± 5 % en poids.

3. Procédé selon la revendication 2, **caractérisé en ce que** l'ultrafiltration est réalisée avec des membranes qui présentent une sélectivité de 1 000 à 50 000 Dalton.

4. Procédé selon au moins l'une quelconque des revendications 2 à 3, **caractérisé en ce que** l'ultrafiltration ou la microfiltration est réalisée avec des modules enroulés en spirale ou des modules plaques-cadres.

5. Procédé selon au moins l'une quelconque des revendications 2 à 4, **caractérisé en ce que** l'ultrafiltration ou la microfiltration est réalisée à une température dans la plage allant de 10 à 55 °C.

6. Procédé selon au moins l'une quelconque des revendications 2 à 5, **caractérisé en ce que** la nanofiltration est réalisée avec des membranes qui présentent une sélectivité de 100 à 1 000 Dalton.

7. Procédé selon au moins l'une quelconque des revendications 2 à 6, **caractérisé en ce que** la nanofiltration est réalisée avec des modules enroulés en spirale.

8. Procédé selon au moins l'une quelconque des revendications 2 à 7, **caractérisé en ce que** la nanofiltration est réalisée à une température dans la plage allant de 10 à 55 °C.

9. Procédé selon au moins l'une quelconque des revendications 2 à 8, **caractérisé en ce que** les phosphates sont précipités en tant que sels de calcium pour la déminéralisation.

10. Procédé selon au moins l'une quelconque des revendications 2 à 9, **caractérisé en ce que** la déminéralisation est réalisée à une température dans la plage allant de 50 à 90 °C.

11. Procédé selon au moins l'une quelconque des revendications 2 à 10, **caractérisé en ce que** le produit de réunion du perméat P3 et du rétentat R1 est soumis à un traitement thermique de 85 à 90 °C pendant une durée de 5 à 10 minutes, et ainsi dénaturé.

12. Procédé selon au moins l'une quelconque des revendications 2 à 11, **caractérisé en ce que** la masse dénaturée ainsi obtenue est mélangée avec des cultures et de la présure à une température de 25 à 35 °C.
